(19) Europäisches Patentamt
European Patent Office
Office européen des brevets

(11) **EP 2 262 314 A2**

(12) **DEMANDE DE BREVET EUROPEEN**

(43) Date de publication:
**15.12.2010 Bulletin 2010/50**

(51) Int Cl.:
***H04W 36/08*** *(2009.01)*

(21) Numéro de dépôt: **10182970.3**

(22) Date de dépôt: **28.03.2003**

(84) Etats contractants désignés:
**AT BE BG CH CY CZ DE DK EE ES FI FR GB GR HU IE IT LI LU MC NL PT RO SE SI SK TR**

(30) Priorité: **29.03.2002 FR 0204043**

(62) Numéro(s) de document de la (des) demande(s) initiale(s) en application de l'article 76 CBE:
**03730298.1 / 1 493 296**

(71) Demandeur: **Alcatel Lucent**
**75007 Paris (FR)**

(72) Inventeurs:
• **Reybet-Degat, Ghislaine**
**75005, Paris (FR)**

• **Agin, Pascal**
**78141, Velizy (FR)**

(74) Mandataire: **El Manouni, Josiane et al**
**Compagnie Financiere Alcatel-Lucent**
**32, avenue de Kléber**
**FR-92700 Colombes (FR)**

Remarques:
Cette demande a été déposée le 30-10-2010 comme demande divisionnaire de la demande mentionnée sous le code INID 62.

(54) **Procédé de configuration de mode compressé dans un système de radiocommunications mobiles**

(57) Procédé de configuration de mode compressé dans un système de radiocommunications mobiles, procédé dans lequel une configuration de mode compressé est définie par des paramètres de mode compressé, lesdits paramètres de mode compressé incluant une durée TGL d'interruption de transmission , et une durée TGPL de motif d'interruptions de transmission, lesdites interruptions de transmission étant définies dans une première structure temporelle de transmission propre à un premier système et étant déterminées relativement à une deuxième structure temporelle de transmission propre à un deuxième système, pour permettre d'effectuer dans le premier système des mesures sur le deuxième système, procédé dans lequel une configuration de mode compressé est choisie parmi un ensemble de configurations de mode compressé dites de référence, lesdits paramètres de mode compressé étant déterminés de manière à ce que, pour chaque configuration de référence, si la durée TGPL est telle que les interruptions de transmission se produisent périodiquement à des positions fixes dans ladite deuxième structure, alors TGL est choisi suffisamment grand pour que deux interruptions de transmission se produisant à deux desdites positions, les plus proches l'une de l'autre, se recouvrent, avec une durée de recouvrement plus grande que la durée nécessaire à effectuer une mesure.

FIG_2

**Description**

La présente invention concerne d'une manière générale les systèmes de radiocommunications mobiles.

La présente invention est notamment applicable aux systèmes CDMA (pour « Code Division Multiple Access »), tels que notamment l'UMTS (pour "Universal Mobile Telecommunication System").

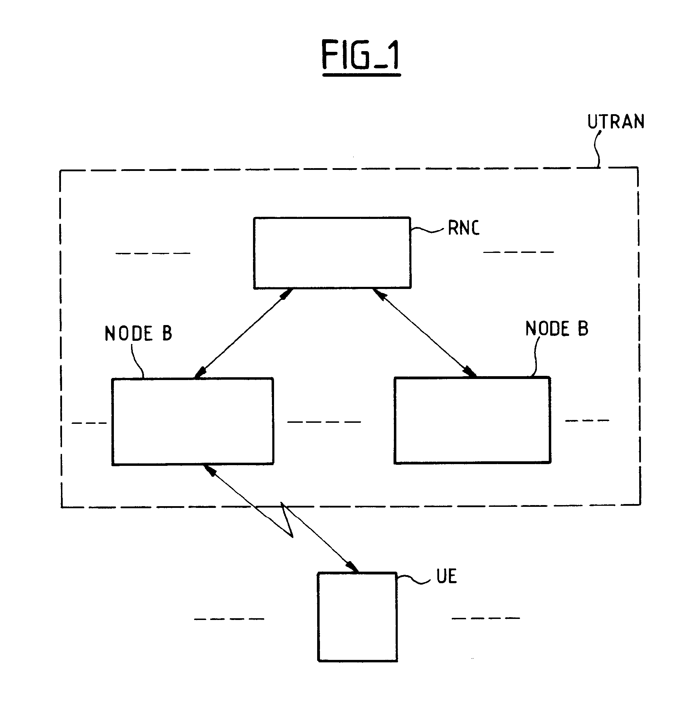

D'une manière générale, un système de radiocommunications mobiles comporte, comme rappelé sur la figure 1, un sous-système d'accès radio comportant lui-même des stations de base (appelées aussi "Node B" dans l'UMTS), et des contrôleurs de stations de base (appelés aussi RNC, pour "Radio Network Controller" dans l'UMTS). L'ensemble formé par les « Node B » et les RNC est aussi appelé UTRAN, pour "UMTS Terrestrial Radio Access Network". L'UTRAN est en relation d'une part avec des terminaux mobiles (appelés aussi équipements utilisateur, ou "User Equipment" ou encore UE ), et d'autre part avec un sous-système de réseau et de commutation (non illustré spécifiquement).

D'une manière générale, ces systèmes font l'objet de normalisation; pour plus d'informations on pourra se référer aux normes correspondantes, publiées par les organismes de normalisation correspondants.

Une technique couramment utilisée dans les systèmes de type CDMA tels que notamment l'UMTS est la technique de transmission selon un mode dit compressé, dans lequel un émetteur interrompt momentanément sa transmission vers un récepteur sur une fréquence donnée pour permettre à ce récepteur d'effectuer d'autres opérations, telles que notamment effectuer des mesures sur des signaux reçus à des fréquences différentes de ladite fréquence donnée. Les interruptions de transmission sont aussi appelées « transmission gaps » en anglais. Notamment, le mode compressé est utilisé dans le sens descendant pour permettre à un terminal mobile d'effectuer des mesures sur des cellules voisines d'une cellule serveuse, notamment pour la préparation de transfert intercellulaire (ou « handover » en anglais). De telles cellules voisines peuvent être des cellules utilisant une même technologie d'accès radio (ou RAT, pour « Radio Access Technology ») que ladite cellule serveuse, ou une technologie d'accès radio différente. Ainsi, dans le système UMTS utilisant la technologie CDMA (« Code Division Multiple Access ») le mode compressé peut être utilisé pour permettre à un UE d'effectuer des mesures sur des cellules GSM utilisant la technologie TDMA (« Time Division Multiple Access »).

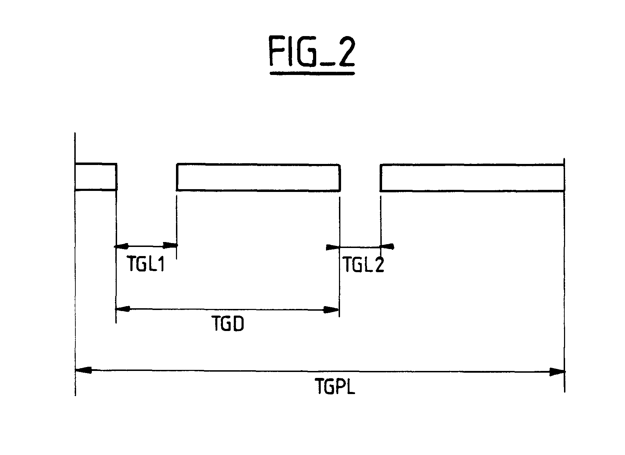

Différents paramètres peuvent être utilisés pour configurer le mode compressé, notamment selon le type de mesure à effectuer. La spécification 3G TS 25.215 (dont la figure 2 ci-annexée est reprise) définit notamment les paramètres de mode compressé suivants:

- TGPL (pour "Transmission Gap Pattern Length " en anglais), ou durée d'un motif d'interruptions de transmission (ou « transmission gap pattern »), cette durée étant exprimée en nombre de trames, et un motif d'interruptions de transmission pouvant contenir jusqu'à deux interruptions de transmission,
- TGL (pour "Transmission Gap Length" en anglais), ou durée d'une interruption de transmission, cette durée étant exprimée en nombre d'intervalles de temps (ou "time-slots"), et étant notée respectivement TGL1, TGL2 dans le cas de motif d'interruptions de transmission contenant deux interruptions de transmission.

On rappelle que selon la structure temporelle de transmission propre à l'UMTS, une trame UMTS comporte 15 intervalles de temps (ou « time-slots »), la période de trame UMTS, notée ici TF_UMTS, est égale à 10 ms, et la période d'intervalle de temps UMTS, notée ici TS_UMTS, est égale à 10/15 ms, soit environ 0.667 ms.

Comme spécifié dans la spécification 3G TS 25.133, les mesures à effectuer par un UE sur des cellules GSM incluent notamment les deux types de mesures suivantes:

- identification initiale du BSIC (ou "initial BSIC identification"),
- reconfirmation du BSIC (ou "BSIC reconfirmation").

On rappelle que dans un système tel que le GSM, le BSIC (pour "Base Station Identity Code") est un code permettant aux terminaux mobiles de distinguer différentes cellules qui utilisent la même fréquence balise. Le BSIC est diffusé sur la fréquence balise de chaque cellule, dans un canal logique appelé SCH (« Synchronisation CHannel ») transmis sur l'intervalle de temps 0 des trames 1, 11, 21, 31 et 41 de la multitrame à 51 trames telle que définie dans le système GSM. On rappelle que selon la structure temporelle de transmission propre au système GSM, une multitrame à 51 trames comporte 51 trames comportant chacune 8 intervalles de temps à l'intérieur desquels sont transmis différents signaux appelés « bursts » (en anglais) correspondant à différents canaux logiques, la période de multitrame GSM, notée ici TMF_GSM, est d'environ 235.38 ms, la période de trame GSM, notée ici TF_GSM, est d'environ 4.615 ms, et la période d'intervalle de temps GSM, notée ici TS_GSM, est d'environ 0.577 ms.

En outre, dans la spécification 3G TS 25.133, les performances requises d'un UE pour les deux mesures rappelées ci-dessus sont définies pour certaines configurations de mode compressé dites de référence. Les performances requises d'un UE sont seulement définies pour ces configurations de référence, puisqu'il n'est bien sûr pas possible de tester toutes les configurations possibles de mode compressé. En particulier, pour chaque configuration de mode compressé de référence, deux contraintes de performances sont indiquées :

- N_identify_abort : ce paramètre indique le nombre maximum de motifs d'interruptions de transmission que l'UE doit utiliser pour décoder un BSIC inconnu, dans la procédure d'identification initiale du BSIC,
- T_reconfirm_abort : ce paramètre indique le temps maximum autorisé pour la reconfirmation du BSIC dans la procédure de re-confirmation du BSIC.

Pour l'identification initiale du BSIC, un UE doit commencer par détecter un burst FCCH. En effet, des informations nécessaires pour acquérir la synchronisation sur une cellule GSM sont diffusées sur la fréquence balise de cette cellule, dans un canal logique appelé FCCH (« Frequency Correction CHannel »). Ce canal est en l'occurrence transmis sur l'intervalle de temps 0 des trames 0, 10, 20, 30 et 40 de la multitrame à 51 trames telle que définie dans le système GSM.

Pour l'identification initiale du BSIC, ou pour la re-confirmation du BSIC, l'UE doit ensuite détecter des bursts SCH.

Pour pouvoir effectuer les mesures rappelées ci-dessus, il est donc nécessaire qu'au moins certaines interruptions de transmission (ou « transmission gaps ») parmi un ensemble d'interruptions de transmission consécutives coïncident avec des « bursts » FCCH/SCH.

Cependant, comme les cellules GSM et UMTS ne sont pas synchronisées, ceci se produit seulement d'une manière statistique, c'est-à-dire beaucoup d'interruptions de transmission peuvent être nécessaires avant que des « bursts » FCCH/SCH n'arrivent à l'UE pendant une interruption de transmission. On peut noter qu'en moyenne ceci a une plus grande probabilité de se produire quand TGL a une grande valeur et/ou TGPL a une faible valeur.

Le demandeur a identifié les problèmes suivants. Pour certaines valeurs de différence de temps entre les cellules GSM et les cellules UMTS, et pour certaines configurations de mode compressé, il peut arriver qu'il ne soit jamais possible de recevoir des bursts FCCH/SCH pendant des interruptions de transmission successives. En particulier, ainsi que l'a observé le demandeur, ceci peut se produire pour des valeurs de TGPL multiples de 6, si TGL n'a pas une valeur suffisamment élevée.

La présente invention a notamment pour but de résoudre de tels problèmes. En particulier, la présente invention a pour but d'optimiser le choix des configurations de mode compressé de référence dans le type d'application rappelé précédemment. Plus généralement, la présente invention a pour but d'optimiser les performances de mode compressé dans de tels systèmes.

Un des objets de la présente invention est un procédé de configuration de mode compressé dans un système de radiocommunications mobiles, procédé dans lequel une configuration de mode compressé est définie par des paramètres de mode compressé, lesdits paramètres de mode compressé incluant une durée TGL d'interruption de transmission et une durée TGPL de motif d'interruptions de transmission, lesdites interruptions de transmission étant définies dans une première structure temporelle de transmission propre à un premier système et étant déterminées relativement à une deuxième structure temporelle de transmission propre à un deuxième système, pour permettre d'effectuer dans le premier système des mesures sur le deuxième système, procédé dans lequel une configuration de mode compressé est choisie parmi un ensemble de configurations de mode compressé dites de référence, procédé dans lequel lesdits paramètres de mode compressé sont déterminés de manière à ce que, pour chaque configuration de référence, si la durée TGPL est telle que les interruptions de transmission se produisent périodiquement à des positions fixes dans ladite deuxième structure, alors TGL est choisi suffisamment grand pour que deux interruptions de transmission se produisant à deux desdites positions, les plus proches l'une de l'autre, se recouvrent, avec une durée de recouvrement plus grande que la durée nécessaire à effectuer une mesure.

Suivant une autre caractéristique, lesdits paramètres de mode compressé sont déterminés de manière à ce que, sinon, pour chaque configuration de référence, TGPL soit choisi tel que les interruptions de transmission ne se produisent pas périodiquement à des positions fixes dans ladite deuxième structure , ou sinon un motif d'interruptions de transmission comporte plusieurs interruptions de transmission.

Suivant une autre caractéristique, le premier système est de type UMTS, le deuxième système est de type GSM, et TGL est choisi dans le groupe comportant les valeurs 11, 12, 13, 14.

Suivant une autre caractéristique, TGL a de préférence la valeur 14.

Suivant une autre caractéristique, le premier système est de type UMTS, le deuxième système est de type GSM, et TGPL est choisi non multiple de 6.

Suivant une autre caractéristique, TGPL est choisi dans un groupe comportant les valeurs 13, 14, 15, 16.

Suivant une autre caractéristique, pour TGPL égal à 13, TGL est choisi dans un groupe comportant les valeurs 5, 7, 10, 14.

Suivant une autre caractéristique, pour TGPL égal à 16, TGL est choisi dans un groupe comportant les valeurs 7, 10, 14.

Suivant une autre caractéristique, le premier système est de type UMTS, le deuxième système est de type GSM, et un motif d'interruptions de transmission comporte deux interruptions de transmission.

Un autre objet de l'invention est un procédé de configuration de mode compressé dans un système de radiocommunications mobiles, procédé dans lequel une configuration de mode compressé est définie par des paramètres de mode compressé, lesdits paramètres de mode compressé incluant une durée TGL d'interruption de transmission et une durée TGPL de motif d'interruptions de transmission, lesdites interruptions de transmission étant définies dans une première structure temporelle de transmission propre à un premier système et étant déterminées relativement à une deuxième structure temporelle de transmission propre à un deuxième système, pour permettre d'effectuer dans le premier système des mesures sur le deuxième système, procédé dans lequel une configuration de mode compressé est choisie parmi un ensemble de configurations de mode compressé dites de référence, procédé dans lequel pour au moins une configuration de référence, TGPL est choisi égal à 13 et TGL est choisi égal à 10.

Un autre objet de la présente invention est un équipement de réseau pour système de radiocommunications mobiles, comportant des moyens pour mettre en oeuvre un tel procédé de configuration de mode compressé.

Un autre objet de la présente invention est un terminal mobile pour système de radiocommunications mobiles, comportant des moyens pour mettre en oeuvre un tel procédé de configuration de mode compressé.

D'autres objets et caractéristiques de la présente invention apparaîtront à la lecture de la description suivante d'un exemple de réalisation, faite en relation avec les dessins ci-annexés dans lesquels:

- la figure 1 rappelle l'architecture générale d'un système de radiocommunications mobiles tel que notamment l'UMTS,
- la figure 2 rappelle les paramètres de mode compressé dans un système tel que notamment l'UMTS.

A titre d'exemple, dans ce qui suit, la présente invention sera plus particulièrement décrite dans l'exemple d'application rappelé précédemment où le mode compressé est utilisé pour permettre à un UE, dans le système UMTS, d'effectuer des mesures sur des cellules GSM.

La présente invention peut être expliquée de la manière suivante.

Pour certaines valeurs de différence de temps entre les cellules GSM et les cellules UMTS, et pour certaines configurations de mode compressé, il peut arriver qu'il ne soit jamais possible de recevoir des bursts FCCH/SCH pendant des interruptions de transmission successives. En particulier, ainsi que l'a observé le demandeur, ceci peut se produire pour des valeurs de TGPL multiples de 6, si TGL n'a pas une valeur suffisamment élevée.

En effet, les durées de trame TF_GSM dans le système GSM et TF_UMTS dans le système UMTS sont liées par la relation suivante:

$$13 * TF\_GSM = 6 * TF\_UMTS .$$

Considérons par exemple une valeur de TGPL égale à 24 (c'est-à-dire un motif d'interruptions de transmission de durée égale à 24 * TF_UMTS, soit 24 * 10 ms, soit 240 ms). Si une interruption de transmission pour une première période TGPL se produit à une certaine position de la multitrame GSM, l'interruption de transmission pour une période TGPL suivante (soit après 240 ms) se produira à la même position décalée de 24 * TF_UMTS - TMF_GSM, soit 240 - 235.38 ms, soit 4.615 ms, et ainsi de suite pour les motifs d'interruptions de transmission suivants. Du fait de la relation rappelée ci-dessus, la séquence des positions des interruptions de transmission successives dans la multitrame GSM est périodique, c'est-à-dire que périodiquement les interruptions de transmission se retrouvent à la même position dans cette multitrame. Dans ce cas, la multitrame GSM sera couverte par seulement 235.38 / 4.615, soit 51, interruptions de transmission se produisant toujours à des positions fixes dans cette multitrame. Dans ce cas, si la durée de mesure permise par une interruption de transmission est inférieure à TGPL * TF_UMTS - TMF_GSM + TS_GSM, soit 240 - 235.38 + 0.577 ms, soit 5.2 ms, il y aura des trous dans la multitrame, c'est-à-dire certaines zones de la multitrame ne seront pas complètement couvertes, et il y a donc une probabilité non nulle que les mesures ne puissent pas être effectuées.

Ainsi que l'a également observé le demandeur, il est nécessaire de tenir compte de la durée TS_GSM dans l'expression ci-dessus. En effet, il est nécessaire que deux interruptions de transmission situées à deux consécutives desdites positions se recouvrent suffisamment pour être assuré que quelle que soit la position d'un intervalle de temps GSM sur lequel une mesure est à effectuer (c'est-à-dire en l'occurrence un intervalle de temps contenant un burst FCCH ou SCH) il y ait toujours une interruption de transmission suffisamment grande pour contenir entièrement cet intervalle de temps, plus une durée nécessaire à l'UE pour effectuer les changements de fréquence nécessaires.

La durée de mesure permise par une interruption de transmission est égale à TGL * TS_UMTS - 2 * Tcom, où Tcom est le temps nécessaire à l'UE pour changer de fréquence. Par exemple, pour les valeurs TGL = 10 et Tcom = 0.845 ms, cette durée de mesure est de 4.98 ms. Cette valeur étant inférieure à la valeur 5.2 ms obtenue comme expliqué ci-dessus dans le cas de valeur TGPL égale à 24, une telle configuration ne permet donc pas à l'UE d'effectuer les mesures sur des cellules GSM dans un temps fini, et ne devrait donc pas être incluse dans les configurations de référence pour lesquelles sont définies les performances requises d'un UE pour les types de mesures rappelées ci-dessus.

La présente invention concerne donc la configuration de mode compressé dans un système de radiocommunications mobiles, dans lequel une configuration de mode compressé est choisie parmi un ensemble de configurations de mode compressé dites de référence définies par des paramètres de mode compressé, lesdits paramètres de mode compressé incluant une durée TGL d'interruption de transmission et une durée TGPL de motif d'interruptions de transmission, lesdites interruptions de transmission étant définies dans une première structure temporelle de transmission propre à un premier système et étant déterminées relativement à une deuxième structure temporelle de transmission propre à un deuxième système, pour permettre d'effectuer dans le premier système des mesures sur le deuxième système.

La présente invention propose que lesdits paramètres de mode compressé soient déterminés de manière à ce que, pour chaque configuration de référence, si la durée TGPL est telle que les interruptions de transmission se produisent périodiquement à des positions fixes dans ladite deuxième structure, alors TGL est choisi suffisamment grand pour que deux interruptions de transmission se produisant à deux desdites positions, les plus proches l'une de l'autre, se recouvrent, avec une durée de recouvrement plus grande que la durée nécessaire à effectuer une mesure.

La présente invention propose en outre que lesdits paramètres de mode compressé soient déterminés de manière à ce que, sinon, pour chaque configuration de référence, TGPL soit choisi tel que les interruptions de transmission ne se produisent pas périodiquement à des positions fixes dans ladite deuxième structure , ou sinon un motif d'interruptions de transmission comporte plusieurs interruptions de transmission.

Dans l'exemple d'application considéré, on a :

$$TF\_UMTS = 10 \text{ ms}$$

$$TMF\_GSM = 235.38 \text{ ms}$$

$$TS\_GSM \approx 0.577 \text{ ms}$$

$$TGPL * TF\_UMTS - TMF\_GSM + TS\_GSM = 240 - 235.38 + 0.577 \text{ ms} = 5.2 \text{ ms}.$$

Comme exposé précédemment, si la durée TGPL est telle que les interruptions de transmission se produisent périodiquement à des positions fixes dans la multitrame GSM, pour que la probabilité que les mesures ne puissent pas être effectuées soit nulle, il est nécessaire que les interruptions de transmission se superposent suffisamment. En l'occurrence il est nécessaire que la durée de recouvrement de deux interruptions de transmission se produisant à deux desdites positions, les plus proches l'une de l'autre, soit plus grande que la durée nécessaire à effectuer une mesure.

Dans cet exemple, une durée TGPL telle que les interruptions de transmission se produisent périodiquement à des positions fixes dans la multitrame GSM correspond à une valeur TGPL multiple de 6.

Dans cet exemple, la durée nécessaire à effectuer une mesure est égale à TS_GSM + 2 * Tcom, où Tcom correspond au temps nécessaire à l'UE pour changer de fréquence.

La présente invention peut aussi être expliquée de la manière suivante.

La présente invention propose un choix de valeur de TGL permettant de choisir n'importe quelle valeur pour TGPL.

Dans l'exemple considéré, et pour une valeur habituelle de Tcom de l'ordre de 0.8 ms, la présente invention propose que que TGL soit choisi supérieur à 11, c'est-à-dire que TGL soit égal à une des valeurs 11, 12, 13, 14, puique la valeur maximum de TGL dans l'UMTS est égale à 14.

Alternativement, la présente invention propose de choisir TGPL non multiple de 6. Dans ce cas, les contraintes sur TGL exposées précédemment n'ont pas besoin d'être vérifiées. De préférence, la valeur TGPL peut être choisie égale à une des valeurs 13, 14, 15 ou 16. Dans ce cas, des valeurs faibles de TGL peuvent être choisies. Des exemples sont donnés dans le tableau suivant :

| TGPL | TGL |
|------|-----|
| 13 | 5 |
| 13 | 7 |
| 13 | 10 |
| 13 | 14 |
| 16 | 7 |
| 16 | 10 |
| 16 | 14 |

Alternativement, la présente invention propose de prévoir deux interruptions de transmission (ou « transmission gaps ») dans un motif d'interruptions de transmission (ou « transmission gap pattern »), de manière également à réduire la probabilité que les mesures ne puissent pas être effectuées.

Notamment, dans l'exemple d'application considéré, un motif d'interruptions de transmission peut comporter deux interruptions de transmission.

La présente invention a également pour objet, outre un procédé de configuration de mode compressé tel qu'exposé dans ce qui précède, un système de radiocommunications mobiles, un équipement de réseau (tel que notamment un contrôleur de stations de base, ou RNC dans un système tel que l'UMTS), et un terminal mobile (tel que notamment UE dans un système tel que l'UMTS), tous comportant des moyens adaptés pour mettre en oeuvre un tel procédé. La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

Des exemples de tels moyens sont donnés dans ce qui suit.

De tels moyens prévus dans un équipement de réseau peuvent comporter notamment des moyens pour choisir une configuration de mode compressé, parmi un ensemble de configurations de référence. De tels moyens peuvent aussi comporter notamment des moyens pour signaler à un terminal mobile des paramètres de mode compressé correspondant à la configuration de mode compressé choisie. De tels moyens peuvent aussi comporter notamment des moyens de transmission et/ou de réception en mode compressé, selon la configuration de mode compressé choisie.

De tels moyens prévus dans un terminal mobile peuvent comporter notamment des moyens pour recevoir d'un équipement de réseau une signalisation relative aux paramètres de mode compressé correspondant à une configuration de mode compressé choisie. De tels moyens peuvent aussi comporter notamment des moyens de réception et/ou d'émission en mode compressé, selon la configuration de mode compressé choisie.

## Revendications

1. Procédé de configuration de mode compressé dans un système de radiocommunications mobiles, ledit mode compressé étant utilisé dans le système UMTS utilisant la technologie CDMA pour permettre à un terminal mobile d'effectuer des mesures sur des cellules du système GSM utilisant la technologie TDMA, procédé dans lequel une configuration de mode compressé est définie par des paramètres de mode compressé (TGL1, TGL2, TGD, TGPL), lesdits paramètres de mode compressé incluant une durée TGL d'interruption de transmission et une durée TGPL de motif d'interruptions de transmission, procédé dans lequel une configuration de mode compressé est choisie parmi un ensemble de configurations de mode compressé dites de référence, procédé **caractérisé en ce que** lesdits paramètres de mode compressé sont déterminés de manière à ce que, pour chaque configuration de référence, si la durée TGPL est telle que TGPL est multiple de 6, alors TGL est choisi dans le groupe comportant les valeurs 11, 12, 13, 14.

2. Procédé selon la revendication 1, dans lequel lesdits paramètres de mode compressé sont déterminés de manière à ce que, sinon, pour chaque configuration de référence, TGPL soit choisi non multiple de 6 , ou sinon un motif d'interruptions de transmission comporte plusieurs interruptions de transmission.

3. Procédé selon l'une des revendications 1 ou 2, dans lequel TGL a de préférence la valeur 14.

4. Equipement de réseau (UTRAN) pour système de radiocommunications mobiles, dit premier système, dans lequel une configuration de mode compressé est définie par des paramètres de mode compressé (TGL1, TGL2, TGD, TGPL), ledit mode compressé étant utilisé dans le système UMTS utilisant la technologie CDMA pour permettre à un terminal mobile d'effectuer des mesures sur des cellules du système GSM utilisant la technolgie TDMA, lesdits paramètres de mode compressé incluant une durée TGL d'interruption de transmission et une durée TGPL de motif d'interruptions de transmission, , équipement comportant des moyens pour choisir une configuration de mode compressé parmi un ensemble de configurations de mode compressé dites de référence, **caractérisé en ce que** lesdits paramètres de mode compressé sont déterminés de manière à ce que, pour chaque configuration de référence, si la durée TGPL est telle que TGPL est multiple de 6, alors TGL est choisi dans le groupe comportant les valeurs 11, 12, 13, 14.

5. Equipement de réseau selon la revendication 4, dans lequel lesdits paramètres de mode compressé sont déterminés de manière à ce que, sinon, pour chaque configuration de référence, TGPL soit choisi non multiple de 6, ou sinon un motif d'interruptions de transmission comporte plusieurs interruptions de transmission.

6. Equipement de réseau selon l'une des revendications 4 ou 5, dans lequel TGL a de préférence la valeur 14.

# FIG_1

UTRAN

RNC

NODE B

NODE B

UE

# FIG_2

TGL1

TGL2

TGD

TGPL